# EUROPEAN PATENT SPECIFICATION

(11) **EP 2 399 811 B1**
(45) Date of publication and mention of the grant of the patent: **27.03.2013**
(21) Application number: 11171060.4
(22) Date of filing: 22.06.2011
(51) Int. Cl.: B62K 5/08, B62K 25/16

(54) **Rotational angle limiting device for a vehicle**
Drehwinkeleinschränkungsvorrichtung für ein Fahrzeug
Dispositif de limitation d'angle de rotation pour véhicule

(30) Priority: 24.06.2010 TW 099120607
(43) Date of publication of application: 28.12.2011
(73) Proprietor: Kwang Yang Motor Co., Ltd., Kaohsiung (TW)
(72) Inventor: Ting, Hsin-Chih, Kaohsiung (TW); Lee, Yen-Hsiu, Kaohsiung City 813 (TW); Huang, Chun-Hao, Kaohsiung (TW)
(74) Representative: Regimbeau

(56) References cited:
- EP-A1- 1 090 832
- EP-A1- 1 391 374
- JP-A- 2010 042 710
- US-A- 4 903 857

## Description

This invention relates to a vehicle, and more particularly to a rotational angle limiting device for a vehicle having two front wheels.

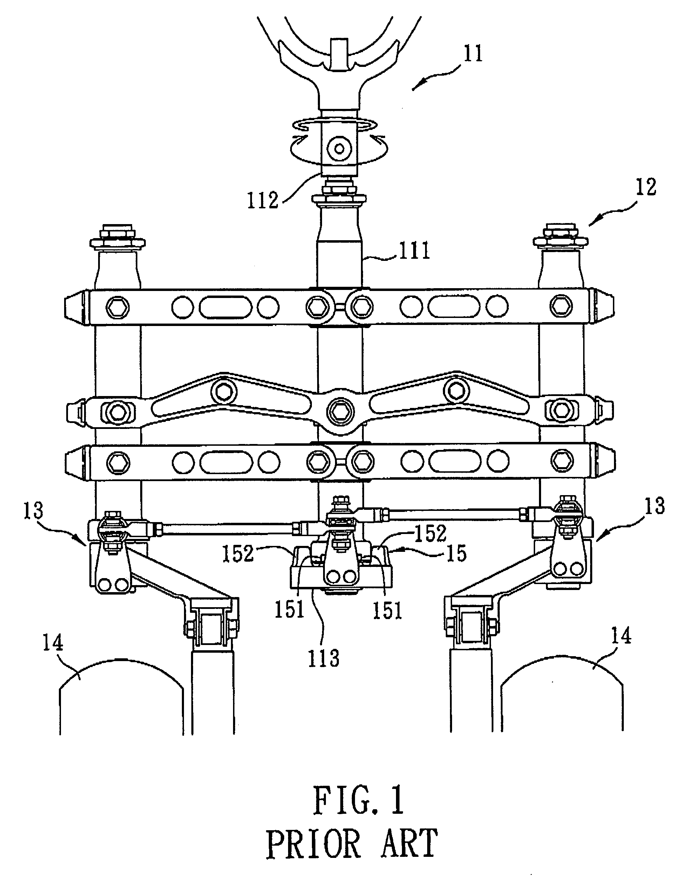

Referring to Fig. 1, a conventional vehicle includes a frame 11, a reclining unit 12 disposed on the frame 11, two suspension units 13 spaced apart from each other and disposed under the reclining unit 12, and two front wheels 14 connected respectively to the suspension units 13. The frame 11 includes a head tube 111, a main steering rod 112 extending through the head tube 111, a fixed disk 113 disposed fixedly on a bottom end of the main steering rod 112, and a steering handle 114 disposed fixedly on a top end of the main steering rod 112. The vehicle further includes a rotational angle limiting unit 15 disposed on the frame 11. The rotational angle limiting unit 15 includes two spaced-apart stop blocks 151 disposed fixedly on a bottom end of the head tube 111, and two spaced-apart limiting blocks 152 disposed fixedly on the fixed disk 113 and aligned respectively with the stop blocks 151.

When the handle 114 is operated to rotate the main steering rod 112, the fixed disk 113 co-rotates with the main steering rod 112. When the main steering rod 112 rotates in a positive direction, one of the limiting blocks 152 comes into contact-with one of the stop blocks 151 to prevent further rotation of the main steering rod 112 in the positive direction. When the main steering rod 112 rotates in a reverse direction opposite to the positive direction, the other one of the limiting blocks 152 comes into contact with the other one of the stop blocks 151 to prevent further rotation of the steering rod 112 in the reverse direction. In this manner, the rotational angle of the main steering rod 112 is limited within a predetermined angle range.

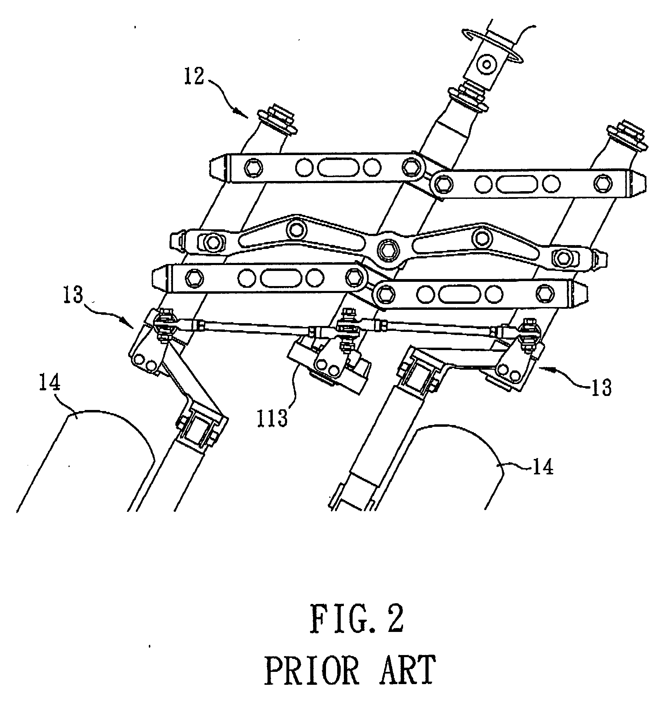

However, the area of the fixed disk 113 needs to be increased to allow for disposition of the limiting blocks 152, thereby affecting adversely arrangement of the suspension units 13 and operation of the reclining unit 12, as shown in Fig. 2.

An example of such a conventional vehicle is described in the document TW 201118003, which has been published after the priority date.

Document EP1391374 A1 discloses a tricycle including a frame, a reclining unit disposed on the frame, one suspension unit, two front wheels, and a rotational angle limiting device, the frame including a head tube, a main steering rod extending rotatably through the head tube, and a steering handle disposed fixedly on the main steering rod, the reclining unit including two side tubes located respectively to two sides of the head tube, the rotational angle limiting device limiting the rotational angle of the main steering rod, the rotational angle limiting device including at least one limiting unit.

The object of this invention is to provide a vehicle that has two front wheels and a rotational angle limiting device, which is arranged to provide a better space applicability.

According to this invention, there is provided a vehicle including a frame, a reclining unit disposed on the frame, two suspension units spaced apart from each other and disposed under the reclining unit, two front wheels connected respectively to the two suspension units, and a rotational angle limiting device, the frame including a head tube, a main steering rod extending rotatably through the head tube, and a steering handle disposed fixedly on the main steering rod, the reclining unit including two side tubes located respectively to two sides of the head tube, each of the suspension units including an auxiliary steering rod extending within a corresponding one of the side tubes, a supporting arm connected fixedly to a bottom end of the auxiliary steering rod, and a shock absorber connected pivotally to the supporting arm and a corresponding one of the front wheels, the rotational angle limiting device limiting the rotational angle of the main steering rod, characterized by:
the rotational angle limiting device including at least one limiting unit, the limiting unit including a limiting member disposed fixedly on one of the side tubes, and two stop members disposed fixedly on the supporting arm of a corresponding one of the suspension units and located respectively to two sides of the limiting member such that, when the main steering rod rotates in a direction, the limiting member comes into contact with one of the stop members, and when the main steering rod rotates in an opposite direction, the limiting member comes into contact with the other one of the stop members.

Since the limiting unit is disposed on the one of the side tubes and the supporting arm of the corresponding one of the suspension units, the space applicability of the vehicle is improved.

These and other features and advantages of this invention will become apparent in the following detailed description of the preferred embodiments of this invention, with reference to the accompanying drawings, in which:
Fig. 1 is a fragmentary schematic front view of a conventional vehicle having two front wheels;
Fig. 2 is a view similar to Fig. 1 but illustrating low space applicability;
Fig. 3 is a schematic front view of the first preferred embodiment of a vehicle according to this invention;
Fig. 4 is a fragmentary schematic top view of the first preferred embodiment, illustrating arrangement of a rotational angle limiting device;
Fig. 5 is a schematic top view of the first preferred embodiment, illustrating operation of the rotational angle limiting device; and
Fig. 6 is a top view of the second preferred embodiment of a vehicle according to this invention.

Before the present invention is described in greater detail in connection with the preferred embodiments, it should be noted that similar elements and structures are designated by like reference numerals throughout the entire disclosure.

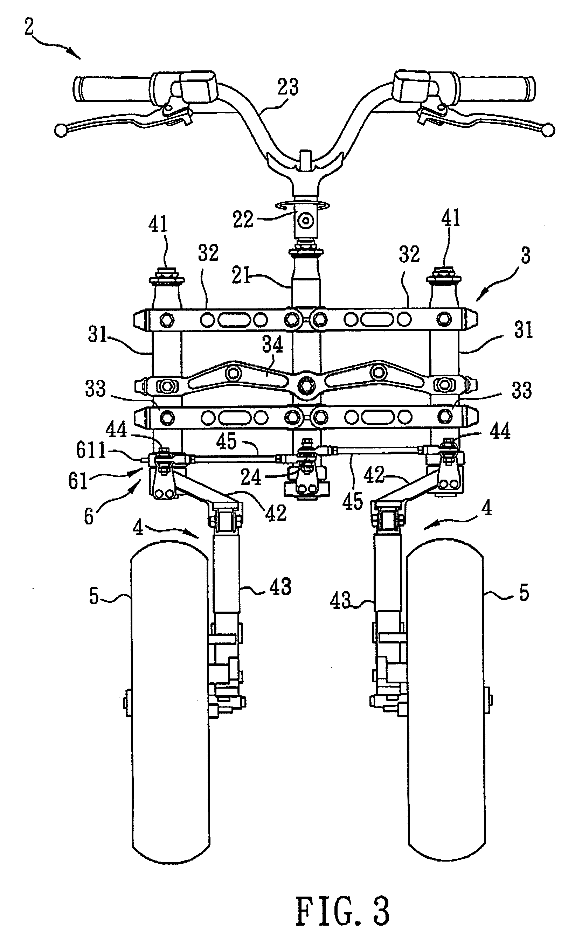

Referring to Fig. 3, the first preferred embodiment of a vehicle according to this invention includes a frame 2, a reclining unit 3 disposed on the frame 2, two spaced-apart suspension units 4 disposed under the reclining unit 3, two front wheels 5 connected respectively to the suspension units 4, and a rotational angle limiting device 6.

The frame 2 includes a head tube 21, a main steering rod 22 extending rotatably through the head tube 21, a steering handle 23 disposed fixedly on a top end of the main steering rod 22, and a first joint 24 disposed on a bottom end of the main steering rod 22.

The reclining unit 3 includes two side tubes 31 located respectively to two sides of the head tube 21, two horizontal upper links 32 each having two ends connected respectively and pivotally to the head tube 21 and the corresponding side tube 31, two lower links 33 disposed under and spaced apart from the upper links 32 and each having two ends connected respectively and pivotally to the head tube 21 and the corresponding side tube 31, and a connecting rod 34 extending between the upper and lower links 32, 33 and connected pivotally to the head tube 21 and the side tubes 31. Alternatively, the reclining unit 3 may includes two connecting rods 34 extending between the upper and lower links 32, 33 and each connected pivotally to the head tube 21 and the side tubes 31.

Each of the suspension units 4 includes an auxiliary steering rod 41 extending within the corresponding side tube 31, a supporting arm 42 disposed fixedly on a bottom end of the auxiliary steering rod 41, a shock absorber 43 connected pivotally to the supporting arm 42 and the corresponding front wheel 5, a second joint 44 disposed on the bottom end of the auxiliary steering rod 41, and a rod-connecting bar 45 connected between the first and second joints 24, 44 for transferring rotation of the main steering rod 22 to the auxiliary steering rod 41. In this embodiment, each of the first and second joints 24, 44 can be a ball joint, universal joint, or similar structure.

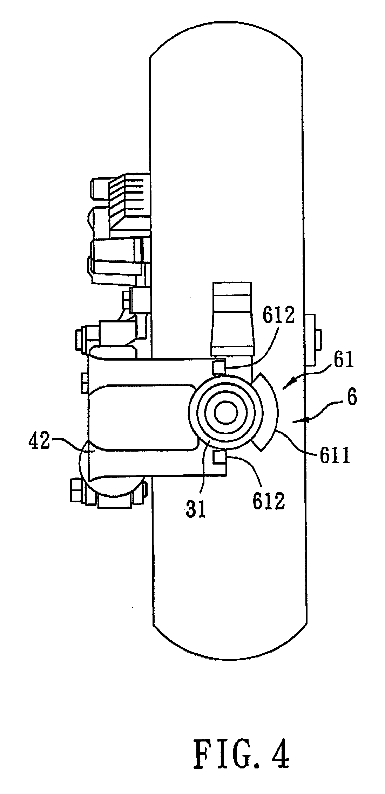

With particular reference to Figs. 3 and 4 (for convenience of illustration, irrelevant components are removed from Fig. 4), the rotational angle limiting device 6 includes a. limit unit 61. The limiting unit 61 includes a limiting member 611 disposed fixedly on one of the side tubes 31 and configured as a curved plate, and two stop members 612 disposed fixedly on the supporting arm 42 of the corresponding suspension units 4 (i.e., the supporting arm 42 disposed under the one of the side tubes 31) and located respectively to two sides of the limiting member 611.

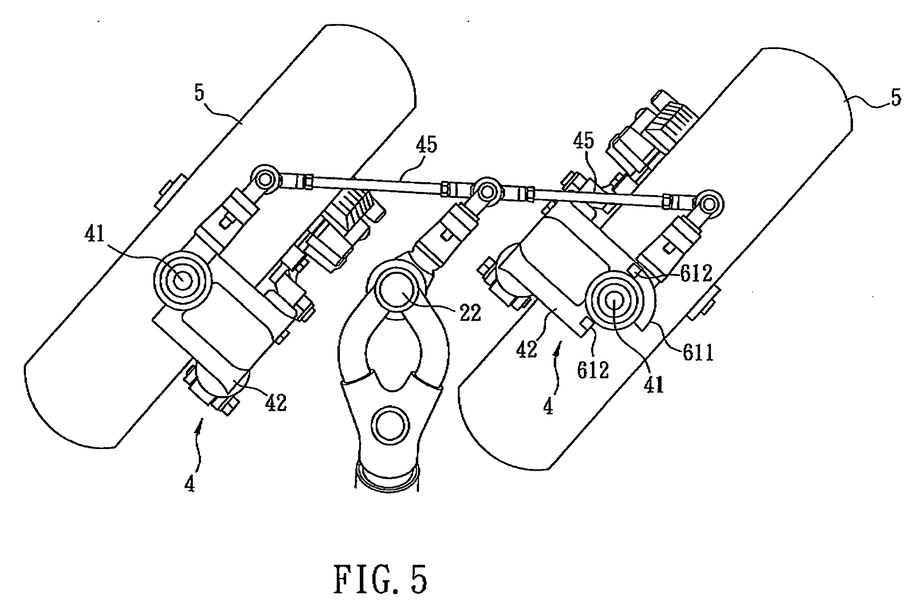

With particular reference to Figs. 3 and 5 (for convenience of illustration, irrelevant components are removed from Fig. 5), during a steering operation, rotation of the main steering rod 45 is transferred to the auxiliary steering rods 41, the supporting arms 42, and the front wheels 5 by the rod-connecting bars 45. When the supporting arms 42 rotate in a positive direction, the limiting member 612 comes into contact with one of the stop members 611 to prevent further rotation of the supporting arms 42 in the positive direction. When the supporting arms 42 rotate in a reverse direction opposite to the positive direction, the limiting member 612 comes into contact with the other one of the stop members 611 to prevent further rotation of the supporting arms 42 in the reverse direction. In this manner, the rotational angle of the steering rod 22 can be limited within a predetermined angle range. Positions of the two stop members 612 on the supporting arm 42 can be adjusted according to a desired angle range.

Since the limiting unit 61 is disposed on the one of the side tubes 31 and the corresponding supporting arm 42, the space applicability of the vehicle is promoted, so that the suspension units 4 are easy to arrange, and operation of the reclining unit 3 cannot be obstructed by the limiting unit 61.

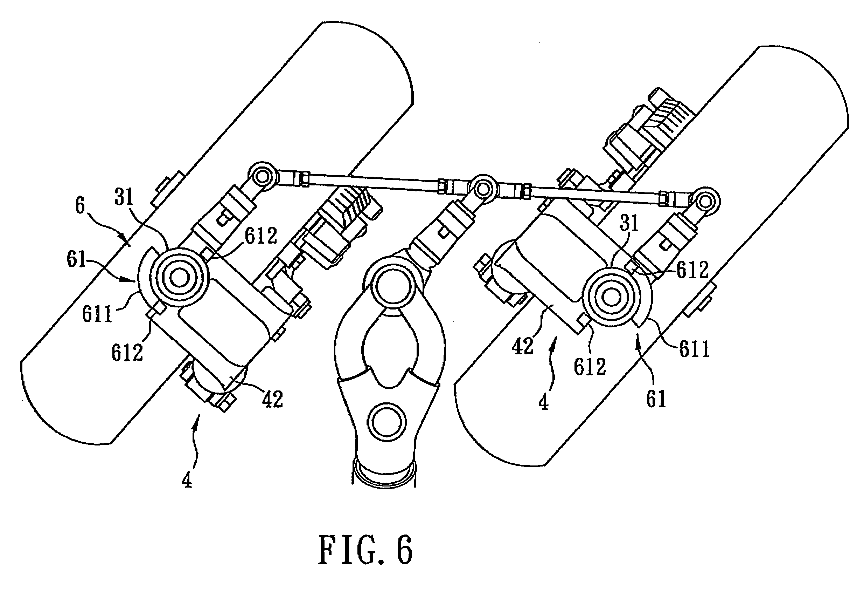

Fig. 6 shows the second preferred embodiment of a vehicle according to this invention, which is similar in construction to the previous embodiment except that, in this embodiment, the rotational angle limiting device 6 includes two limiting units 61. Each of the limiting units 61 includes a limiting member 611 disposed fixedly on a respective one of the side tubes 31, and two stop members 612 disposed fixedly on the supporting arm 42 of the corresponding suspension unit 4 (i.e., the supporting arm 42 disposed under the respective one of the side tubes 31) and located respectively to two sides of the limiting member 611.

Through synchronous operation of the two limiting units 61, a force for stopping rotation of the main steering rod 22 can be increased to facilitate a rotational-angle limiting operation and reduce wear experienced by the limiting members 611 and the stop members 612, thereby prolonging the service life of the limiting units 61.

## Claims

1. A vehicle including a frame (2), a reclining unit (3) disposed on the frame (2), two suspension units (4) spaced apart from each other and partially disposed under the reclining unit (3), two front wheels (5) connected respectively to the two suspension units (4), and a rotational angle limiting device (6), the frame (2) including a head tube (21), a main steering rod (22) extending rotatably through the head tube (21), and a steering handle (23) disposed fixedly on the main steering rod (22), the reclining unit (3) including two side tubes (31) located respectively to two sides of the head tube (21), each of the suspension units (4) including an auxiliary steering rod (41) extending within a corresponding one of the side tubes (31), a supporting arm (42) connected fixedly to a bottom end of the auxiliary steering rod (41), and a shock absorber (43) connected pivotally to the supporting arm (42) and a corresponding one of the front wheels (5), the rotational angle limiting device (6) limiting the rotational angle of the main steering rod (22),
the rotational angle limiting device (6) including at least one limiting unit (61), the limiting unit (61) including a limiting member (611) disposed fixedly on one of the side tubes (31), and two stop members (612) disposed fixedly on the supporting arm (42) of a corresponding one of the suspension units (4) and located respectively to two sides of the limiting member (611) such that, when the main steering rod (22) rotates in a direction, the limiting member (611) comes into contact with one of the stop members (612), and when the main steering rod (22) rotates in an opposite direction, the limiting member (611) comes into contact with the other one of the stop members (612).

2. The vehicle as claimed in Claim 1, **characterized in that** the rotational angle limiting device (6) includes two the limiting units (61), the limiting members (611) of the limiting units (61) being disposed respectively and fixedly on the side tubes (31).

3. The vehicle as claimed in Claim 1, **characterized in that** the reclining unit (3) further includes two horizontal upper links (32) each having two ends connected respectively and pivotally to the head tube (21) and a respective one of the side tubes (31), two horizontal links (33) disposed under and spaced apart from the upper links (32) and each having two ends connected respectively and pivotally to the head tube (21) and the respective one of the side tubes (31), and at least one connecting rod (34) extending between the upper and lower links (32, 33) and connected pivotally to the head tube (21) and the side tubes (31).

4. The vehicle as claimed in Claim 1, **characterized in that** each of the suspension units (4) further includes a rod-connecting bar (45) connected between the main steering rod (22) and a corresponding one of the auxiliary steering rods (41) in such a manner to allow rotation to be transferred from the main steering rod (22) to the corresponding one of the auxiliary steering rods (41).

5. The vehicle as claimed in Claim 4, further **characterized in that** the frame (2) further includes a first joint (24) disposed on a bottom end of the main steering rod (22), and each of the suspension units (4) further includes a second joint (44) disposed on the bottom end of the auxiliary steering rod (41), the rod-connecting bar (45) of each of the suspension units (4) being connected between the first joint (24) and the second joint (44) of a corresponding one of the suspension units (4).

6. The vehicle as claimed in Claim 5, further **characterized in that** each of the first and second joints (24, 44) is a ball joint.

7. The vehicle as claimed in Claim 5, further **characterized in that** each of the first and second joints (24, 44) is a universal joint.

## Patentansprüche

1. Fahrzeug, umfassend einen Rahmen (2), eine verstellbare Einheit (3), die an dem Rahmen (2) angeordnet ist, zwei Aufhängungseinheiten (4), die voneinander beabstandet sind und teilweise unter der verstellbaren Einheit (3) angeordnet sind, zwei Vorderräder (5), die jeweils mit den zwei Aufhängungseinheiten (4) verbunden sind, und eine Drehwinkelbegrenzungsvorrichtung (6), wobei der Rahmen (2) ein Steuerrohr (21), eine Hauptlenkstange (22), die sich drehbar durch das Steuerrohr (21) erstreckt, und einen Lenkgriff (23), der fest an der Hauptlenkstange (22) angeordnet ist, umfasst, wobei die verstellbare Einheit (3) zwei Seitenrohre (31) umfasst, die jeweils auf zwei Seiten des Steuerrohrs (21) angeordnet sind, wobei jede der Aufhängungseinheiten (4) eine Zusatzlenkstange (41), die in einem entsprechenden der Seitenrohre (31) verläuft, einen Haltearm (42), der fest mit einem unteren Ende der Zusatzlenkstange (41) verbunden ist, und einen Stoßdämpfer (43), der drehbar mit dem Haltearm (42) und einem entsprechenden der Vorderräder (5) verbunden ist, umfasst, wobei die Drehwinkelbegrenzungsvorrichtung (6) den Drehwinkel der Hauptlenkstange (22) begrenzt, wobei die Drehwinkelbegrenzungsvorrichtung (6) mindestens eine Begrenzungseinheit (61) umfasst, wobei die Begrenzungseinheit (61) ein Begrenzungselement (611) umfasst, das fest an einem der Seitenrohre (31) angeordnet ist, und zwei Anschlagelemente (612), die fest an dem Haltearm (42) von einer entsprechenden der Aufhängungseinheiten (4) angeordnet sind, und die jeweils derart auf zwei Seiten des Begrenzungselements (611) angeordnet sind, dass, wenn sich die Hauptlenkstange (22) in eine Richtung dreht, das Begrenzungselement (611) mit einem der Anschlagelemente (612) in Kontakt kommt, und wenn sich die Hauptlenkstange (22) in eine entgegengesetzte Richtung dreht, das Begrenzungselement (611) mit dem anderen der Anschlagelemente (612) in Kontakt kommt.

2. Fahrzeug nach Anspruch 1, **dadurch gekennzeichnet, dass** die Drehwinkelbegrenzungsvorrichtung (6) zwei Begrenzungseinheiten (61) umfasst, wobei die Begrenzungselemente (611) der Begrenzungseinheiten (61) jeweils fest an den Seitenrohren (31) angeordnet sind.

3. Fahrzeug nach Anspruch 1, **dadurch gekennzeichnet, dass** die verstellbare Einheit (3) ferner zwei waagerechte obere Verbindungsglieder (32) umfasst, die jeweils zwei Enden aufweisen, die jeweils drehbar mit dem Steuerrohr (21) und einem jeweiligen der Seitenrohre (31) verbunden sind, zwei waagerechte Verbindungsglieder (33), die unter den und beabstandet von den oberen Verbindungsgliedern (32) angeordnet sind und jeweils zwei Enden aufweisen, die jeweils drehbar mit dem Steuerrohr (21) und dem jeweiligen der Seitenrohre (31) verbunden sind, und mindestens eine Verbindungsstange (34), die zwischen den oberen und unteren Verbindungsgliedern (32, 33) verläuft und drehbar mit dem Steuerrohr (21) und den Seitenrohren (31) verbunden ist.

4. Fahrzeug nach Anspruch 1, **dadurch gekennzeichnet, dass** jede der Aufhängungseinheiten (4) ferner einen Stangenverbindungsstab (45) umfasst, der zwischen der Hauptlenkstange (22) und einer entsprechenden der Zusatzlenkstangen (41) derart verbunden ist, dass eine Drehbewegung von der Hauptlenkstange (22) auf die entsprechende der Zusatzlenkstangen (41) übertragbar ist.

5. Fahrzeug nach Anspruch 4, ferner **dadurch gekennzeichnet, dass** der Rahmen (2) ferner ein erstes Gelenk (24) umfasst, das an einem unteren Ende der Hauptlenkstange (22) angeordnet ist, und jede der Aufhängungseinheiten (4) ferner ein zweites Gelenk (44) umfasst, das am unteren Ende der Zusatzlenkstange (41) angeordnet ist, wobei der Stangenverbindungsstab (45) von jeder der Aufhängungseinheiten (4) zwischen dem ersten Gelenk (24) und dem zweiten Gelenk (44) von einer entsprechenden der Aufhängungseinheiten (4) verbunden ist.

6. Fahrzeug nach Anspruch 5, ferner **dadurch gekennzeichnet, dass** von dem ersten und zweiten Gelenk (24, 44) jedes ein Kugelgelenk ist.

7. Fahrzeug nach Anspruch 5, ferner **dadurch gekennzeichnet, dass** von dem ersten und zweiten Gelenk (24, 44) jedes ein Kreuzgelenk ist.

## Revendications

1. Véhicule comprenant un châssis (2), une unité inclinable (3) disposée sur le châssis (2), deux unités de suspension (4) espacées l'une de l'autre et partiellement disposées sous l'unité inclinable (3), deux roues avant (5) respectivement raccordées aux deux unités de suspension (4), et un dispositif de limitation d'angle de rotation (6), le châssis (2) comprenant un tube de direction (21), une bielle de direction principale (22) s'étendant en rotation à travers le tube de direction (21) et un guidon (23) disposé de manière fixe sur la bielle de direction principale (22), l'unité inclinable (3) comprenant deux tubes latéraux (31) positionnés respectivement des deux côtés du tube de direction (21), chacune des unités de suspension (4) comprenant une bielle de direction auxiliaire (41) s'étendant à l'intérieur d'un tube correspondant des tubes latéraux (31), un bras de support (42) raccordé de manière fixe à une extrémité inférieure de la bielle de direction auxiliaire (41) et un amortisseur (43) raccordé de manière pivotante au bras de support (42) et à une roue correspondante des roues avant (5), le dispositif de limitation d'angle de rotation (6) limitant l'angle de rotation de la bielle de direction principale (22),
le dispositif de limitation d'angle de rotation (6) comprenant au moins une unité de limitation (61), l'unité de limitation (61) comprenant un élément de limitation (611) disposé de manière fixe sur l'un des tubes latéraux (31) et deux éléments de butée (612) disposés de manière fixe sur le bras de support (42) d'une unité correspondante des unités de suspension (4) et positionnés respectivement des deux côtés de l'élément de limitation (611) de sorte que, lorsque la bielle de direction principale (22) tourne dans une direction, l'élément de limitation (611) vient en contact avec l'un des éléments de butée (612), et lorsque la bielle de direction principale (22) tourne dans une direction opposée, l'élément de limitation (611) vient en contact avec l'autre des éléments de butée (612).

2. Véhicule selon la revendication 1, **caractérisé en ce que** le dispositif de limitation d'angle de rotation (6) comprend deux unités de limitation (61), les éléments de limitation (611) des unités de limitation (61) étant disposés respectivement et de manière fixe sur les tubes latéraux (31).

3. Véhicule selon la revendication 1, **caractérisé en ce que** l'unité inclinable (3) comprend en outre deux liaisons supérieures horizontales (32) ayant chacune deux extrémités raccordées respectivement et de manière pivotante au tube de direction (21) et à un tube respectif des tubes latéraux (31), deux liaisons horizontales (33) disposées sous et espacées des liaisons supérieures (32) et ayant chacune deux extrémités raccordées respectivement et de manière pivotante au tube de direction (21) et à un tube respectif des tubes latéraux (31) et au moins une bielle (34) s'étendant entre les liaisons supérieures et inférieures (32, 33) et raccordée de manière pivotante au tube de direction (21) et aux tubes latéraux (31).

4. Véhicule selon la revendication 1, **caractérisé en ce que** chacune des unités de suspension (4) comprend en outre une barre de raccordement de bielle (45) raccordée entre la bielle de direction principale (22) et une bielle correspondante des bielles de direction auxiliaires (41) afin de permettre le transfert de la rotation de la bielle de direction principale (22) à la bielle de direction correspondante des bielles de direction auxiliaires (41).

5. Véhicule selon la revendication 4, **caractérisé en outre en ce que** le châssis (2) comprend en outre un premier joint (24) disposé sur une extrémité inférieure de la bielle de direction principale (22) et chacune des unités de suspension (4) comprend en outre un second joint (44) disposé sur l'extrémité inférieure de la bielle de direction auxiliaire (41), la barre de raccordement de bielle (45) de chacune des unités de suspension (4) étant raccordée entre le premier joint (24) et le second joint (44) d'une unité correspondante des unités de suspension (4).

6. Véhicule selon la revendication 5, **caractérisé en outre en ce que** chacune des premier et second joints (24, 44) est un joint à rotule.

7. Véhicule selon la revendication 5, **caractérisé en outre en ce que** chacun des premier et second joints (24, 44) est un joint universel.
